(19) Europäisches Patentamt / European Patent Office / Office européen des brevets

(11) **EP 1 580 524 B1**

(12) **FASCICULE DE BREVET EUROPEEN**

(45) Date de publication et mention
de la délivrance du brevet:
**20.08.2008 Bulletin 2008/34**

(51) Int Cl.:
*G01B 11/25* (2006.01)    *G01B 11/30* (2006.01)
*G01B 11/16* (2006.01)

(21) Numéro de dépôt: **05290646.8**

(22) Date de dépôt: **24.03.2005**

(54) **Procédé et dispositif de caractérisation d'un endommagement de structure faisant appel au moiré d'ombre**

Verfahren und Vorrichtung zur Charakterisierung von Strukturschäden mittels Moiré- Schatten

Method and device for characterising structural damage using moiré shadows

(84) Etats contractants désignés:
**AT BE BG CH CY CZ DE DK EE ES FI FR GB GR
HU IE IS IT LI LT LU MC NL PL PT RO SE SI SK TR**

(30) Priorité: **25.03.2004 FR 0403096**

(43) Date de publication de la demande:
**28.09.2005 Bulletin 2005/39**

(73) Titulaire: **AIRBUS France
31060 Toulouse (FR)**

(72) Inventeur: **Fournier, Nicolas
31100 Toulouse (FR)**

(74) Mandataire: **Santarelli
Immeuble Innopolis A,
B.P. 388
31314 Labège Cedex (FR)**

(56) Documents cités:
**EP-A- 0 674 151         US-A- 5 025 285
US-A- 5 311 286**

• **J.A.QUIROGA ET AL: "Isotropic n-dimensional
fringe pattern normalization" OPTICS
COMMUNICATIONS, vol. 224, 2003, pages
221-227, XP004454952**

**Description**

La présente invention concerne un système de contrôle non destructif de structure, et plus particulièrement un système de caractérisation des endommagements de structure à partir de l'observation de déformations sur la surface de ladite structure.

L'évaluation des endommagements de structure, c'est à dire toute anomalie de la structure susceptible de nuire à son intégrité, peut se révéler critique lors d'utilisations dans des environnements sévères. Dans le domaine de l'aéronautique par exemple, les impacts d'objets divers sur la structure d'un avion peuvent en diminuer les caractéristiques mécaniques, particulièrement lors d'un impact sur un point sensible. De même, dans le cas d'une déformation apparue lors des phases de fabrication ou d'assemblage d'une pièce, le repérage de tels défauts est nécessaire.

Lorsque les déformations sont importantes, leur caractérisation peut se faire directement par un opérateur de contrôle qui prend une décision sur la suite à donner à l'endommagement. Ladite décision correspond généralement à un choix entre la validation, la réparation ou, dans les cas les moins favorables, le changement de la pièce défectueuse.

Lorsqu'il s'agit de déformations de petite taille, la visualisation à l'oeil nu montre ses limites et nécessite généralement que l'opérateur de contrôle soit très entraîné. Repousser ces limites est encore plus important lorsqu'il s'agit de faibles déformations de surface alors que la dégradation interne de la structure est importante.

De façon traditionnelle, pour remédier à ce problème, on teste les surfaces à l'aide de palpeurs mécaniques qui permettent de mesurer une déformation par rapport à un profil théorique. Cependant, ces moyens mécaniques sont très difficiles à mettre en oeuvre dès lors qu'on cherche à contrôler des pièces en opération. En effet, ces moyens sont souvent peu pratiques et fragiles et sont donc incompatibles avec des milieux non protégés. Ajouté à cela, il faut considérer le risque d'endommagement lors du transport de ces moyens de contrôle, sans compter que les palpeurs généralement utilisés nécessitent une mise en oeuvre fastidieuse et ont un coût d'utilisation élevé.

En outre, pour des raisons de qualité, on peut vouloir aboutir à des résultats plus précis que ceux obtenus par les palpeurs classiques. En effet, pour un défaut de faible diamètre mais de profondeur importante, le contrôleur peut mal évaluer l'endommagement alors que les risques de fatigue structurelle sont bien présents et peuvent se révéler importants selon la position du défaut sur la structure.

Pour améliorer l'observation de déformations, il est également connu d'utiliser des principes optiques.

Dans le document EP 0 674 151, une visualisation de défauts de surface est effectuée au moyen d'un moiré d'ombre sur la surface observée. Elle permet de mettre en évidence l'existence d'une déformation de la surface en observant à travers une grille rigide l'ombre du réseau de cette grille sur la surface, projetée au moyen d'une source d'éclairement. Un tel dispositif muni d'une grille rigide ne s'utilise que surélevé par rapport à la surface et en outre, ne donne aucune information quantitative sur l'ampleur de la déformation.

Le document WO 00/39523 essaye d'apporter une réponse à ce dernier problème. Ce document révèle une grille de moiré surélevée par rapport à une surface de structure à observer et propose de mesurer l'étendue de la déformation du motif généré par la projection de l'image de la grille sur la surface. Cette solution nécessite ensuite de comparer l'étendue de la déformation avec les résultats de mesures effectuées sur des échantillons pour lesquels la déformation est connue. Pour obtenir des résultats comparables à ceux obtenus sur les éprouvettes calibrées, le réglage de l'inclinaison de la grille est primordial.

Un problème de ces dispositifs réside dans le fait que la grille soit surélevée. En pratique, surélever de tels dispositifs est difficile et parcourir la surface avec ceux-ci devient pratiquement impossible en particulier lorsqu'il faut utiliser un instrument de mesure précis, comme un micromètre, pour incliner la grille d'un certain angle pour chaque mesure.

Une autre difficulté rencontrée avec le procédé révélé par le document WO 00/39523 repose sur le fait que tous les types de déformations doivent être connus puisqu'on les compare ensuite à des éprouvettes calibrées pour permettre de caractériser les anomalies de surface observées. Dans le cadre de l'évaluation de la compression à froid d'un métal telle que celle présentée dans le document en question, le dispositif semble adapté mais dès lors que l'on sort d'une application spécifique et que l'on cherche à évaluer toute sorte de déformations de surface, le dispositif n'est pas d'une grande utilité.

Le document US-5,311,286 révèle un appareil et un procédé pour la mesure de la rugosité, ou d'une autre caractéristique, d'une surface en transmettant un faisceau de lumière par une grille sous un angle d'incidence relatif par rapport à cette grille. Ladite grille présente une pluralité de barres opaques parallèles et de barres adjacentes transparentes. Le faisceau de lumière réalise plusieurs lignes d'ombres sur la surface se trouvant sous la grille, ces ombres correspondant aux barres opaques de ladite grille. Un appareil photo enregistre la configuration des lignes d'ombres et la configuration enregistrée est superposée avec des lignes de balayages parallèles équidistantes orientées perpendiculairement aux lignes d'ombre. Les distances entre les points correspondant à l'intersection d'une ligne de balayage avec une ligne d'ombre sont mesurées pour déterminer la rugosité, ou une autre caractéristique, de la surface analysée.

Le document US-5,025,285 indique comment une grille de Moiré peut être produite à bon marché. Des grilles réalisées selon le procédé décrit dans ce document peuvent être utilisées dans diverses techniques d'analyse de surface.

La présente invention a pour objectif de fournir un procédé et un dispositif permettant de caractériser un endommagement de structure faciles à mettre en oeuvre. De préférence, le dispositif selon l'invention sera d'un prix de revient peu élevé et facilement transportable.

A cet effet, la présente invention propose un procédé de caractérisation d'un endommagement de structure comportant les étapes de disposer à proximité de la surface de ladite structure une grille de moiré, de diriger une source de lumière vers ladite grille de manière à créer une ombre de ladite grille sur ladite structure, caractérisé en ce qu'il comporte en outre les étapes:

- d'enregistrer, grâce à un moyen d'acquisition, une image du motif observé à travers la grille suivant une direction d'observation différente de celle de la source de lumière,
- de représenter graphiquement l'endommagement à partir de ladite image enregistrée au moyen d'un algorithme de traitement de ladite image,
- de caractériser l'endommagement à partir de ladite représentation. Ladite grille est flexible et directement apposée sur la surface à analyser pour éviter des réglages longs et contraignants.

Dans un mode particulier de l'invention, le procédé peut comporter en outre les étapes de parcourir la surface, de contrôler visuellement, par le biais dudit moyen d'acquisition ou non, l'existence ou non de déformations dudit motif, d'arrêter le parcours de la surface, par exemple lorsqu'une déformation apparaît, d'enregistrer une image grâce au moyen d'acquisition et de caractériser l'endommagement.

Dans un mode de mise en oeuvre particulier, l'utilisateur peut transférer une ou plusieurs images enregistrées non traitées vers des moyens de traitement déportés pour caractériser en temps différé les endommagements.

Lors du traitement de l'image du motif observé, l'algorithme de traitement comporte par exemple une étape de normalisation des franges d'interférences apparaissant sur ladite image. Cette étape permet alors d'éliminer l'arrière plan du motif qui ne serait pas utile à la caractérisation d'un endommagement et de normaliser le champ de phase observé.

Dans une autre forme de réalisation, lors du traitement de ladite image, l'algorithme permet par exemple d'obtenir la modulation de phase pour déterminer la position spatiale de chaque point de ladite image, à partir des caractéristiques du montage et de l'intensité observée.

Avantageusement, le résultat de l'étape de réalisation d'une représentation graphique est une représentation graphique selon une échelle de couleurs. Cette échelle peut avantageusement être représentative de la profondeur de l'endommagement, le point de l'endommagement le plus profond pouvant par exemple être représenté par une couleur foncée alors que le reste de l'endommagement pourrait être coloré de manière dégradée depuis la hauteur nulle de la surface où la couleur serait plus claire. La représentation graphique peut être une vue en deux ou plusieurs dimensions de l'endommagement.

L'invention concerne également un dispositif pour la mise en oeuvre du procédé qui comporte:

- un support, de préférence un boîtier opaque pour éviter les lumières parasites,
- une grille de moiré,
- un moyen d'éclairement,
- un moyen d'acquisition d'image dont l'axe d'observation est décalé par rapport à celui du moyen d'éclairement,
- un moyen de traitement d'image,
- un moyen d'affichage du résultat dudit traitement.

La grille de moiré est flexible pour augmenter la surface de contact entre ladite grille et la structure observée, en particulier lorsque celle-ci est non-plane.

Selon un mode de réalisation de l'invention, ladite grille subit de préférence préalablement à son utilisation un traitement antireflet.

Avantageusement, le moyen d'acquisition d'image est fixé au support pour permettre d'observer en permanence depuis un même axe d'observation, assurant ainsi à l'utilisateur mettant en oeuvre le procédé l'invariabilité des caractéristiques du montage quel que soit l'axe d'observation de l'utilisateur lui-même.

Le moyen d'acquisition d'image comporte par exemple par un moyen d'acquisition numérique permettant un enregistrement photo ou vidéo.

De façon avantageuse, ledit enregistrement est traité par des moyens de traitement, tel qu'un ordinateur programmé, appliquant au moins un algorithme de traitement d'image. Ces algorithmes sont par exemple les algorithmes utilisés dans le procédé décrit plus haut.

Le résultat fourni par le moyen de traitement d'image, déterminant la position des points de l'endommagement dans l'espace, est par exemple ensuite transformé graphiquement, représenté globalement ou non sur un écran, d'ordinateur par exemple, en couleurs ou en noir et blanc par des vues en deux ou trois dimensions. A cet effet, le dispositif selon l'invention comporte avantageusement des moyens pour transformer graphiquement le résultat fourni par le moyen de traitement d'image, un écran pour la visualisation de la représentation graphique obtenue, permettant une représentation selon une échelle de couleurs, par des vues en deux ou trois dimensions.

Des détails et avantages de la présente invention ressortiront mieux de la description qui suit, faite en référence aux dessins schématiques annexés sur lesquels :

- La figure 1 est une coupe schématique d'un dispositif selon l'invention,
- La figure 2 représente une perspective d'une grille de moiré,
- La figure 3 illustre la mise en oeuvre d'un procédé selon l'invention sur une surface non plane,
- La figure 4 représente une image pouvant être observée et enregistrée à l'aide d'un moyen d'acquisition de l'image d'un dispositif selon l'invention,
- La figure 5 est une représentation en deux dimensions d'un endommagement à partir d'une l'image prise à travers la grille de la figure 2, et
- La figure 6 est une autre représentation, en trois dimensions cette fois, de l'endommagement à partir de l'image prise à travers la grille de la figure 2.

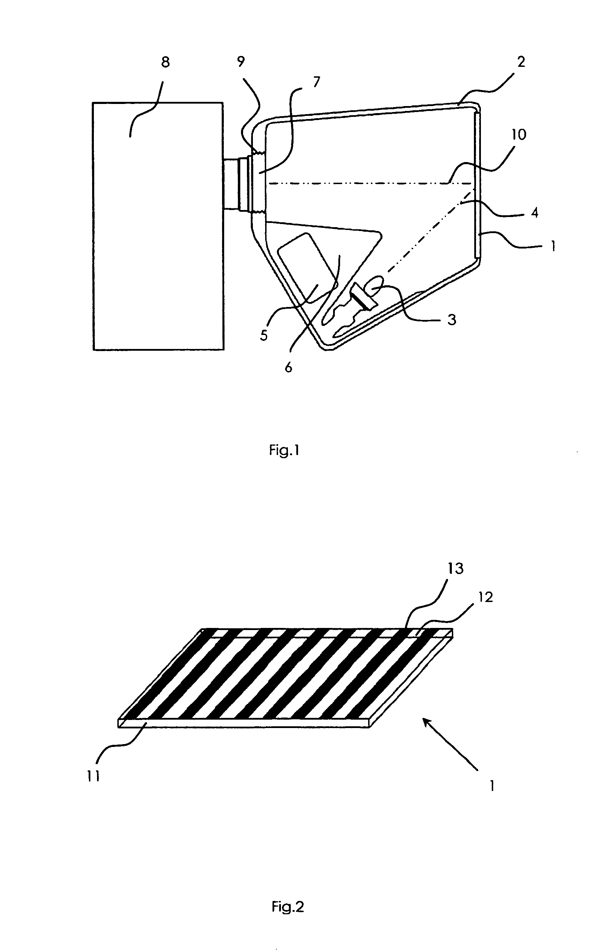

Sur la figure 1, on reconnaît en vue schématique de dessus un dispositif comprenant en premier lieu une grille de moiré 1 fixée sur un support 2 ainsi qu'un moyen d'acquisition d'image 8 muni d'un objectif.

Dans la forme de réalisation représentée, le support 2 est un boîtier, de préférence opaque pour éviter les pollutions lumineuses. La grille de moiré 1 coulisse le long des parois du boîtier jusqu'à une position maximale de manière à ce qu'elle ne bouge plus une fois positionnée sur le support 2. En variante, la grille de moiré peut être fixée sur le support 2 par vissage.

On reconnaît également sur cette figure 1 la présence d'une source lumineuse 3, par exemple une diode, éclairant la grille de moiré 1 selon un axe d'éclairage 4. Cet axe 4 présente une incidence comprise par exemple entre 40˚ et 50˚ -de préférence 45˚- sur le plan de la grille de moiré 1.

Dans une variante de réalisation, le support 2 peut disposer d'un emplacement 6 permettant de rendre le dispositif autonome, cet emplacement 6 pouvant par exemple contenir une pile électrique 5. Cet emplacement 6 est alors de préférence délimité par un séparateur permettant d'empêcher la lumière provenant directement de la diode d'atteindre l'objectif du moyen d'acquisition de l'image et donc de ne pas perturber les mesures d'intensité lors des calculs de phase expliqués plus bas.

Le moyen d'acquisition de l'image 8 vient se fixer sur une ouverture 7 dont le support 2 est pourvu. Ce moyen est ici schématiquement représenté. Il s'agit par exemple d'un appareil photographique numérique. Dans la forme de réalisation représentée au dessin, cet appareil photo numérique est monté à l'aide d'un pas de vis 9 (mais bien entendu, toute autre moyen de fixation pourrait être utilisé ici). L'ouverture 7 et le pas de vis 9 permettent à l'appareil photo numérique de photographier la grille de moiré 1 selon un axe d'observation 10.

Dans l'exemple de réalisation montré sur les dessins, les caractéristiques du montage, c'est à dire les axes d'observation 10 et d'éclairage 4, sont reproductibles très facilement, sans risque d'obtenir une information différente pour un même endommagement qu'entraînerait un changement de celles-ci. De préférence l'angle entre ces deux axes 4 et 10 est de 45˚.

Concernant la grille de moiré 1, si l'on se réfère maintenant à la figure 2, on pourra en apprécier des caractéristiques techniques. Cette grille de moiré comporte tout d'abord un support transparent 11. Ensuite, cette grille présente un pas de grille défini par l'alternance sur la face supérieure de ce support transparent 11 de bandes transparentes 12 et des bandes sombres 13. Les bandes sombres 13 peuvent par exemple être sérigraphiées sur la surface supérieure du support transparent 11. Nécessairement, l'épaisseur de ce support n'est pas nulle. Cette observation permet de comprendre qu'en maintenant le plan de la grille au-dessus du plan d'appui du support sur la surface à analyser, cette caractéristique permet d'observer des franges sans surélever le dispositif, même lorsque aucun endommagement n'est présent. Toujours concernant la grille, on peut également traiter la surface supérieure de la grille pour minimiser les reflets. Le contraste du motif observé en est alors augmenté.

Pour permettre l'observation des franges de moiré, la grille 1 est orientée de telle sorte que ses bandes longitudinales 12, 13 ne forment pas un angle nul avec l'alignement entre le moyen d'acquisition de l'image 8 et la source lumineuse 3, c'est-à-dire le plan contenant les axes d'éclairage 4 et d'observation 10. De préférence, les bandes longitudinales 12 et 13 seront perpendiculaires à ce plan pour observer les franges de manière plus contrastée.

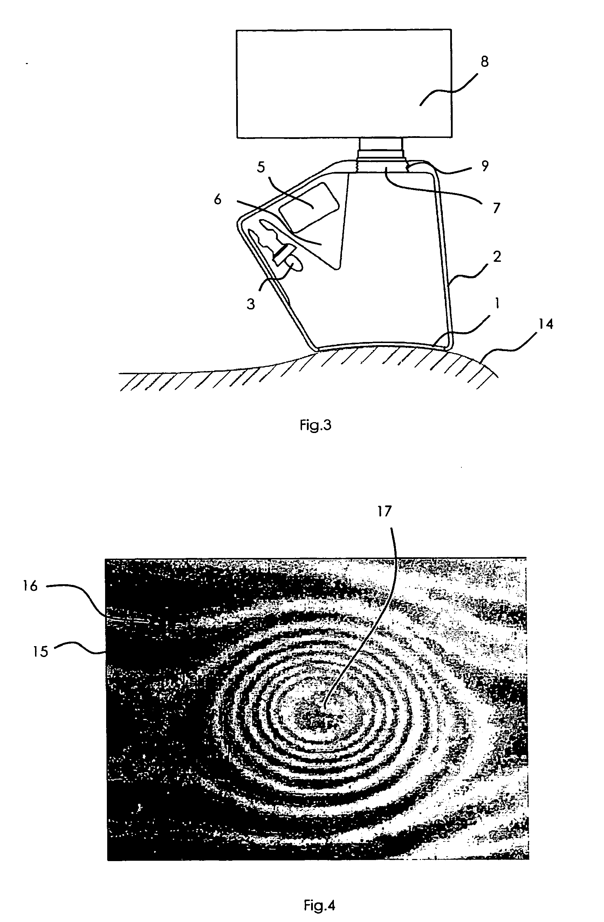

Sur la figure 3, on voit comment appliquer la grille de moiré 1 du dispositif sur une surface 14 à contrôler qui n'est pas nécessairement plane.

Avant de parcourir la surface, les paramètres du moyen d'acquisition d'image doivent être réglés convenablement pour obtenir des résultats optimums. Contrairement à ce que l'on pourrait croire, un bon réglage du moyen d'acquisition de l'image ne correspond pas forcément à un réglage maximal de la résolution. Par exemple, pour un défaut de l'ordre du millimètre, une résolution moindre suffira à caractériser l'endommagement par rapport à la résolution nécessaire pour caractériser des défauts de l'ordre de 10 micromètres. L'analyse sera également plus rapide avec une résolution moindre. Ces réglages dépendent du dispositif utilisé et des structures testées et sont généralement déterminés par essais.

La figure 4 donne un exemple de l'image du motif des franges de moiré que le moyen d'acquisition de l'image 8 peut enregistrer lors du passage sur un endommagement de surface. On remarque sur cette figure des franges sombres de faible intensité 15 et des franges claires d'intensité supérieure 16. Ces franges sombres 15 et claires 16 ne sont plus parallèles comme elles le sont lorsque aucun endommagement n'est présent. Sur cette figure, elles forment notamment des motifs concentriques autour du centre de l'endommagement 17.

Lorsque l'utilisateur du dispositif décrit ici est confronté à de telles observations, plusieurs options s'offrent à lui. Il peut enregistrer ou non l'image du motif dans la mémoire du moyen d'acquisition d'image 8 pour chaque endommagement. Il peut aussi analyser directement le défaut à travers le moyen d'acquisition d'image ou sur un écran dont le moyen d'acquisition d'image pourrait disposer. Il peut également parcourir l'ensemble de la structure à analyser et enregistrer toutes les images en une seule fois et les traiter ensemble par la suite grâce à des moyens de traitement. Il peut aussi procéder au traitement à chaque acquisition d'une image.

L'image est ensuite analysée par des moyens de traitement qui appliqueront des algorithmes afin d'obtenir une représentation de l'endommagement observé à partir du motif des franges de moiré.

Le modèle mathématique standard qui donne l'intensité observée à une position (x,y) peut être défini par :

$$I(x,y) = a(x,y) + b(x,y)\cos[\phi(x,y)],$$

où $a(x,y)$ et b$(x,y)$ représentent respectivement l'intensité du fond et l'amplitude, et $\phi(x,y)$ la phase contenant l'information qui nous intéresse. Dans le cas du moiré d'ombre,

$$\phi(x,y) = \frac{2\pi}{p}(\tan\alpha + \tan\beta)z,$$

où $p$ correspond au pas de la grille, $\alpha$ et $\beta$ correspondent aux angles d'illumination et d'observation, et $z$ à la hauteur par rapport à un plan de référence.

Dans un premier mode de réalisation de l'invention, on peut considérer l'intensité des franges comme localement monochromatique, donc l'intensité peut être représentée par une fonction sinusoïdale modulée par un plan $p(.)$. D'où, en minimisant une fonction coût qui prend en compte la différence entre l'intensité mesurée et le modèle proposé, on pourra obtenir la démodulation de phase $\phi(x,y)$ à partir de l'intensité $I(x,y)$. Dans ce mode particulier de l'invention, la fonction coût à minimiser pour chaque point $(x, y)$ est:

$$U(x,y) = \sum_{(\xi,\eta)\in(N_{x,y}\cap S)}\left\{[I'(\xi,\eta) - \cos p(x,y,\xi,\eta)]^2 + \beta[\phi_0(\xi,\eta) - p(x,y,\xi,\eta)]^2 m(\xi,\eta)\right\},$$

avec

$$p(x,y,\xi,\eta) = \phi_0(x,y) + \omega_x(x,y)(x-\xi) + \omega_y(x,y)(y-\eta),$$

où $S$ correspond à la région d'intérêt où des données valides sont présentes ; $N(x, y)$ est la région avoisinant le point $(x, y)$ où l'on cherche à obtenir la phase ; $m(x, y)$ est un champ indicateur qui est égal à 1 si la phase au point $(x, y)$ a déjà été obtenue, à 0 autrement ; $I'(x, y)$ correspond à une version filtrée haute fréquence et normalisée de l'intensité $I(x, y)$, ce qui permet d'éliminer avantageusement les basses fréquences du fond $a(x,y)$ et de rendre l'amplitude $b(x, y)$ $\approx 1$. Les champs $\omega_x(x,y)$ et $\omega_y(x,y)$ sont des estimations de fréquences locales le long des axes $x$ et $y$. Ces champs représentent également les pentes du plan de phase. Finalement, le paramètre $\beta$ est une constante qui contrôle la régularité de la phase $\phi_0(x,y)$.

Pour obtenir la démodulation de phase, il faut minimiser la fonction coût $U(x, y)$ pour chaque point en fonction des variables $\phi_0(x, y)$, $\omega_x(x,y)$ et $\omega_y(x, y)$. Cependant, cette fonction n'est pas linéaire. On ne peut donc pas utiliser de techniques d'optimisation rapides. Une méthode connue pour résoudre ce problème consiste à évaluer les composantes de phase et de fréquence de $\mathbf{r}(x, y) = (\phi_0, \omega_x, \omega_y)^T$ pour chaque point à partir de la récursion

$$\mathbf{r}^{k+1} = \mathbf{r}^{k} - \mu \nabla_r U(x, y),$$

où $\mu$ correspond à l'étape de descente du gradient. Le symbole $\nabla_r$ dénote le gradient de $U(x, y)$ en fonction des trois composantes de $\mathbf{r}$.

Cette méthode nécessite une condition initiale $\mathbf{r}^0$. Quand le vecteur racine $\mathbf{r}(x_0, y_0)$ est maximisé, la constante de régularité $\beta$ n'est pas prise en compte puisque le point de départ est le premier à subir la démodulation et par conséquent, la fonction indicateur $m(x, y)$ est égale à 0 sur $S$. Une fois que le vecteur racine $\mathbf{r}(x_0, y_0)$ a été calculé, il est possible de poursuivre avec le reste des points sur $S$. Cet algorithme doit suivre une trajectoire séquentielle et continue, point par point, à partir du point racine.

Comme mentionné précédemment, cet algorithme démodule séquentiellement le motif dessiné par les franges de moiré, en partant d'un point de départ et en se propageant ensuite jusqu'à ce que l'ensemble de la zone à analyser ait été parcouru. La manière de parcourir le motif est une phase critique de la démodulation. Le but, lors du parcours du motif des franges de moiré, est de guider l'algorithme de sorte que les zones de meilleure qualité soient traitées en priorité et les zones de moindre qualité en dernier. Cette technique a pour effet de limiter les erreurs possibles aux seules zones où la qualité est moindre. Pour obtenir une carte de qualité satisfaisante, on peut par exemple utiliser le paramètre d'amplitude $b(x, y)$. Dans le cas de décalage de phases, on peut obtenir facilement la modulation de ce paramètre. Cependant, lorsqu'on utilise un seul motif de franges, comme dans l'invention, la modulation est en général plus difficile à obtenir.

La technique utilisée par l'algorithme de l'invention est de suivre le tracé des franges du motif, c'est à dire de parcourir le motif le long des lignes isophases. Cette stratégie a été décrite par Servin et Quiroga dans leur publication "Isochromatics demodulation from a single image using a regularized phase tracking technique" (M. servin, J. A. Quiroga, Journal of Modern Optics, Volume 48, Number 3, 521-531, 2001). Le principe consiste à affecter un niveau de "qualité" pour un niveau de gris de l'image. Par exemple, dans une image à 256 niveaux de gris, on peut arbitrairement choisir que les zones de "meilleure qualité" correspondent à des niveaux de gris supérieurs à 128, et les zones de "faible qualité" à des niveaux inférieurs à 128. En utilisant ce principe, on divise l'image en deux zones. La démodulation se fera alors en priorité sur les zones de "meilleure qualité" puis sur les zones de "faible qualité", ce qui signifie que la qualité telle qu'elle est définie à travers cette technique, ne correspond pas à un rapport signal-bruit élevé. A partir de l'intensité des motifs de frange, on peut donc construire une carte de qualité à deux niveaux et démoduler en priorité les zones de "meilleure qualité" auxquelles on peut par exemple affecter une valeur de 1 et les zones de "faible qualité" une valeur de 0.

Dans un deuxième mode de réalisation de l'invention, la modulation de phase est obtenue différemment. Dans ce mode de réalisation, l'algorithme recherche le signal en quadrature du motif des franges. Si le motif peut être décrit par

$$I(x, y) = b(x, y) \cos\left[\phi(x, y)\right],$$

où on évalue $a(x, y) \approx 0$, le signal en quadrature est donné par

$$Q_n\left\{I(x, y)\right\} = -b(x, y) \sin\left[\phi(x, y)\right],$$

où $Q_n\{\ \}$ est l'opérateur quadratique. A partir de ce signal en quadrature, on peut déterminer la phase non dépliée $W\{\phi(x, y)\}$ sur l'ensemble de la région à analyser en utilisant la fonction arctan:

$$W\left\{\phi(x, y)\right\} = \arctan\left(\frac{-Q_n\left\{I(x, y)\right\}}{I(x, y)}\right),$$

où $W\{\ \}$ est l'opérateur non déplié modulo $2\pi$.

Sachant que dans la plupart des situations pratiques, la modulation $b(x, y)$ correspond à un signal basse

EP 1 580 524 B1

fréquence, une approximation du gradient de *I(x,y)* peut être obtenue par

$$\nabla I(x,y) = -b(x,y)\sin[\phi(x,y)]\nabla\phi(x,y).$$

En multipliant par $\nabla\phi(x,y)$ et en réarrangeant les termes, on obtient

$$Q_n\{I(\mathbf{r})\} = \frac{\nabla\phi(\mathbf{r})}{|\nabla\phi(\mathbf{r})|}\frac{\nabla I(\mathbf{r})}{|\nabla\phi(\mathbf{r})|} = \mathbf{n}_\phi(\mathbf{r})\frac{\nabla I(\mathbf{r})}{|\nabla\phi(\mathbf{r})|} = -b(\mathbf{r})\sin[\phi(\mathbf{r})]$$

D'après cette équation, on voit que l'opérateur quadratique $Q_n\{\}$ est composé de deux termes, un premier terme d'orientation $n_\phi$, et un second correspondant à une généralisation isotrope en *n*-dimension de la transformée de l'espace de Hilbert

$$\mathbf{H}_n\{I(x,y)\} = \frac{\nabla I}{|\nabla\phi|}.$$

Ce second terme est un opérateur linéaire dont la transformée de Fourier correspond au n ième filtre de Reisz en une dimension le long des coordonnées spectrales, c'est à dire que $\mathbf{H_n}\{.\}$ peut être calculée par

$$\mathbf{H}_n\{I(\mathbf{r})\} = FT^{-1}\left\{i\frac{\mathbf{q}}{|\mathbf{q}|}FT\{I(\mathbf{r})\}\right\},$$

où $FT\{.\}$ correspond à l'opérateur de Fourier et $\mathbf{q} = (u,v)$ est la position du vecteur dans le domaine spectral, ce qui correspond physiquement aux fréquences spatiales.

Le premier terme $\mathbf{n}_\phi(\mathbf{r}) = \dfrac{\nabla\phi(\mathbf{r})}{|\nabla\phi(\mathbf{r})|}$ est un vecteur unitaire normal aux isophases correspondantes, dirigé dans la direction du terme d'orientation des franges $\nabla\phi(\mathbf{r})$. Ce terme lié à la direction des franges ne peut être calculé directement parce que l'on n'accède à la phase que par le biais de l'intensité, et les angles d'orientation des franges calculés par le gradient d'intensité ne correspondent pas aux angles calculés par le gradient de phase. Il faut donc développer la phase pour obtenir le terme d'orientation des franges.

Pour développer l'orientation des franges, il est proposé de faire appel à un algorithme similaire à celui décrit dans le premier mode de réalisation ci-dessus. Une fois la carte du développement de l'orientation des franges obtenues, il est possible d'obtenir directement la phase non dépliée $W\{\phi(x,y)\}$ sur l'ensemble de la région à analyser. La dernière étape de ce mode de réalisation consiste donc à développer la phase non dépliée $W\{\phi(x,y)\}$.

Pour ces deux modes de réalisation, la modulation et les variations du fond sont indésirables parce que la fonction coût compare les valeurs mesurées avec le modèle du motif des franges : aucun fond et une modulation sinusoïdale constante. Il faut donc préalablement traiter les images du motif des franges pour éliminer le fond et normaliser la modulation.

L'algorithme proposé ici pour parvenir à l'élimination du fond et à la normalisation du motif est basé sur l'opérateur quadratique décrit précédemment.

Comme décrit plus haut, on ne peut pas obtenir le champ orientation directement à partir du gradient de phase. Par contre, on peut calculer une pseudo-orientation du champ directement par le gradient d'intensité

$$\tilde{\mathbf{n}}_\phi(\mathbf{r}) = \frac{\nabla I}{|\nabla I|} = sign[\sin(\phi)]\,\mathbf{n}_\phi(\mathbf{r})$$

D'après cette équation, $\tilde{\mathbf{n}}_\phi$ et $\mathbf{n}_\phi$ ont la même orientation mais des directions opposées chaque fois que $\sin(\phi)$ change de signe. En utilisant $\tilde{\mathbf{n}}_\phi$ plutôt que $\mathbf{n}_\phi$, ce changement de signe donne lieu à un nouvel opérateur appelé opérateur quasi-quadratique :

$$\tilde{Q}_n\left\{I_{HP}\right\} = \tilde{\mathbf{n}}(\mathbf{r})\mathbf{H}_n\left\{I_{HP}\right\}.$$

où $I_{HP}$ est l'intensité haute fréquence du motif des franges, c'est à dire sans le fond pour lequel on suppose qu'il ne contient que des basses fréquences.

En remplaçant à partir de l'équation précédente, on obtient

$$\tilde{Q}_n\left\{I_{HP}(\mathbf{r})\right\} = -\text{sign}\left[\sin\phi\right]m(\mathbf{r})\sin\phi(\mathbf{r}).$$

Finalement, on peut calculer la modulation de phase à partir de ce terme quasi-quadratique

$$W\left\{\tilde{\phi}\right\} = \arctan\left(\frac{-\tilde{Q}_n\left\{I_{HP}\right\}}{I_{HP}}\right) = \text{sign}\left[\sin\phi\right]W\left\{\phi\right\},$$

où $W\{.\}$ est l'opérateur de repli.

D'après cette équation, on voit que les cartes de phase $W\{\tilde{\phi}\}$ et $W\{\phi\}$ ne diffèrent que par leur signe, chaque fois que $\sin(\phi)$ change de signe. Par conséquent, on peut calculer la version normalisée de l'intensité I(r) à partir de $W\{\tilde{\phi}\}$ :

$$I_N(\mathbf{r}) = \cos\left[W\left\{\tilde{\phi}(\mathbf{r})\right\}\right] = \cos\phi(\mathbf{r}).$$

D'un point de vue pratique, par rapport à l'invention, le calcul du champ d'orientation $\tilde{\mathbf{n}}_\phi$ n'est pas nécessaire pour la normalisation puisque l'opérateur quasi-quadratique est défini par

$$\tilde{Q}_n\left\{I\right\} = \frac{\nabla I}{|\nabla I|}\frac{\nabla I}{|\nabla\phi|} = \frac{|\nabla I|}{|\nabla\phi|},$$

donc, finalement, l'expression générale utilisée pour calculer l'opérateur quasi-quadratique est

$$\tilde{Q}_n\left\{I_{HP}\right\} = \left|\mathbf{H}_n\left\{I_{HP}\right\}\right|,$$

où, comme jusqu'à présent, $\mathbf{H}_n\{\ \}$ est l'opérateur de Hilbert de dimension $n$.

L'utilisation du premier ou du second mode de réalisation dépend de l'utilisateur du système. Le second mode est plus rapide et suffit généralement à représenter la déformation correspondant au motif. Le premier mode est quant à lui plus robuste et est utilisé lorsque les résultats du second mode sont peu concluants.

Après avoir sélectionné l'algorithme à utiliser et l'analyse du motif effectuée, l'utilisateur doit préciser au système un point de l'image correspondant à une hauteur nulle, ce qui permet d'obtenir une représentation complète de la déformation représentée sur l'image par le motif des franges.

Pour chaque point de l'image, défini par exemple par sa position (x,y) sur ladite image, les algorithmes déterminent la hauteur z de la surface correspondant à cette position.

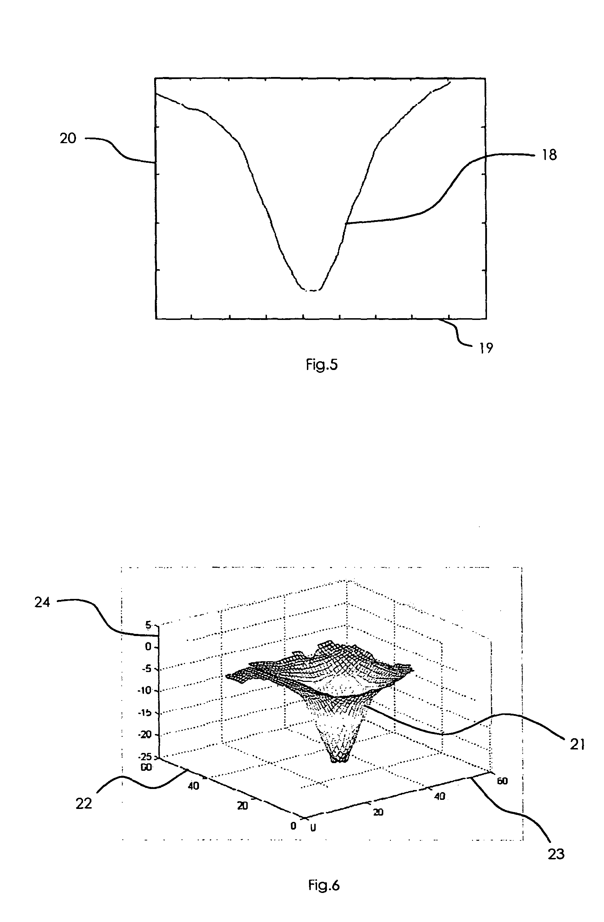

Les figures 5 et 6 présentent deux des différentes vues susceptibles d'être obtenues par le biais des algorithmes décrits ci-dessus.

Sur la figure 5, on a représenté une vue en deux dimensions d'un endommagement 18 obtenue par les algorithmes présentés ci-dessus. Des échelles 19, 20 de dimensions de l'ordre de la dizaine de micromètres permettent à l'utilisateur de caractériser l'endommagement représenté en fonction des différentes positions spatiales de la surface 18 en terme de largeur et de profondeur, dans une direction donnée. Ce type de vue en deux dimensions correspond à une coupe de l'endommagement.

Sur la figure 6, on a représenté une vue en trois dimensions de l'endommagement 21 obtenue à l'aide des algorithmes présentés plus haut. Des échelles 22, 23, 24 dont l'unité est la dizaine de micromètres, permettent de représenter précisément l'endommagement 21. Pour caractériser l'endommagement on peut ensuite se servir de différents critères. Les critères de caractérisation dépendent de l'application mais à partir de la géométrie complète, l'homme du métier peut déterminer par exemple si certaines limites maximums prédéterminées dans une des directions ont été atteintes.

La représentation des figures 5 et 6 peut aussi être une représentation en couleurs. Une échelle de couleurs peut alors être définie. Elle peut par exemple être représentative de la profondeur de l'endommagement, le point de l'endommagement le plus profond pouvant par exemple être représenté par une couleur foncée alors que le reste de l'endommagement pourrait être coloré de manière dégradée depuis la hauteur nulle de la surface où la couleur serait plus claire. La représentation graphique en couleurs peut être une vue en deux ou plusieurs dimensions de l'endommagement.

La présente invention ne se limite pas à la forme de réalisation préférentielle du dispositif décrit et représenté aux dessins ni aux variantes de réalisation du procédé selon l'invention présentées plus haut. Elle concerne également toutes les variantes de réalisation à la portée de l'homme du métier dans le cadre des revendications ci-après.

## Revendications

**1.** Procédé de caractérisation d'un endommagement de structure comportant les étapes de disposer à proximité de la surface (14) de ladite structure une grille de moiré (1), de diriger une source de lumière (3) vers ladite grille (1) de manière à créer une ombre de ladite grille sur ladite structure et d'enregistrer, grâce à un moyen d'acquisition (8), une image du motif observé à travers la grille suivant une direction d'observation différente de celle de la source de lumière (3),

ladite grille (1) étant une grille flexible directement apposée sur la surface (14) à analyser, ledit procédé comportant en outre les étapes suivantes :

- de représenter graphiquement l'endommagement à partir de ladite image enregistrée au moyen d'un algorithme de traitement de ladite image, et
- de caractériser l'endommagement à partir de ladite représentation.

**2.** Procédé selon la revendication 1, **caractérisé en ce qu'**il comporte en outre les étapes de parcourir la surface, de contrôler visuellement l'existence ou non de déformations dudit motif, d'arrêter le parcours de la surface, d'enregistrer une image grâce au moyen d'acquisition et de caractériser l'endommagement,

**3.** Procédé selon la revendication 2, comportant les étapes de transférer une ou plusieurs images enregistrées non traitées vers des moyens de traitement déportés pour caractériser en temps différé les endommagements.

**4.** Procédé selon la revendication 3, **caractérisé en ce que** l'algorithme de traitement de l'image comporte une étape de normalisation des franges d'interférences apparaissant sur ladite image.

**5.** Procédé selon la revendication 3, **caractérisé en ce que** ledit algorithme réalise la modulation de phase pour déterminer la position spatiale de chaque point de ladite image, à partir des caractéristiques du montage et de l'intensité observée.

**6.** Procédé selon l'une quelconque des revendications précédentes, **caractérisé en ce que** le résultat de l'étape de représentation graphique de l'endommagement est une représentation graphique selon une échelle de couleurs.

**7.** Procédé selon l'une quelconque des revendications précédentes, **caractérisé en ce que** le résultat desdits moyens de traitement est transformé en une représentation graphique en deux dimensions de l'endommagement (18).

**8.** Procédé selon l'une quelconque des revendications précédentes, **caractérisé en ce que** le résultat desdits moyens de traitement est transformé en une représentation graphique en plusieurs dimensions de l'endommagement (21).

**9.** Dispositif de caractérisation d'un endommagement de structure comportant :

- un support (2),
- une grille de moiré (1),
- un moyen d'éclairement (3),
- un moyen d'acquisition d'image (8) dont l'axe d'observation (10) est décalé par rapport à celui du moyen d'éclairement (4),
- un moyen de traitement d'image,
- un moyen d'affichage du résultat dudit traitement, **caractérisé en ce que** la grille de moiré (1) est flexible.

**10.** Dispositif selon la revendication 9, **caractérisé en ce que** la grille de moiré (1) subit préalablement à son utilisation un traitement antireflet.

**11.** Dispositif selon l'une des revendications 9 ou 10, **caractérisé en ce que** ledit moyen d'acquisition d'image (8) est fixé au support.

**12.** Dispositif selon l'une quelconque des revendications de 9 à 11, **caractérisé en ce qu'**un enregistrement de l'image se fait par un moyen d'acquisition numérique.

**13.** Dispositif selon la revendication 12, **caractérisé en ce que** ledit enregistrement est traité par des moyens de traitement appliquant des algorithmes de traitement d'image.

**14.** Dispositif selon l'une quelconque des revendications de 9 à 13, **caractérisé en ce qu'**il comporte en outre des moyens pour transformer graphiquement le résultat fourni par le moyen de traitement d'image, un écran pour la visualisation de la représentation graphique obtenue, permettant une représentation selon une échelle de couleurs, par des vues en deux ou trois dimensions (18, 21).

**Claims**

**1.** A method for characterizing a structural damage including steps of arranging in the vicinity of the surface (14) of said structure a moire grid (1), of directing a light source (3) towards said grid (1) so as to create a shadow of said grid on said structure and of recording, using an acquisition means (8), an image of the pattern observed through the grid in a direction of observation different from that of the light source (3), said grid (1) being a flexible grid directly applied to the surface (14) to analyze, said method further comprising the following steps:

- graphically representing the damage on the basis of said recorded image by means of an algorithm for processing said image, and
- characterizing the damage on the basis of said representation.

**2.** A method according to claim 1, **characterized in that** it further comprises the steps of traversing the surface, of visually checking the existence or not of distortions of said pattern, of stopping the traversal of the surface, of recording an image using an acquisition means and of characterizing the damage.

**3.** A method according to claim 2, comprising the steps of transferring one or several unprocessed recorded images to remote processing means for differed characterization of the damage.

**4.** A method according to claim 3, **characterized in that** the image processing algorithm comprises a step of normalizing the interference fringes that appear on said image.

**5.** A method according to claim 3 **characterized in that** said algorithm performs phase modulation to determine the position in space of each point of said image, on the basis of the characteristics of the mounting and of the intensity observed.

**6.** A method according to any of the preceding claims, **characterized in that** the result of the step of graphic representation the damage is a graphic representation according to a color scale.

**7.** A method according to any one of the preceding claims, **characterized in that** the result of said processing means is transformed into a two-dimensional graphic representation of the damage (18).

8. A method according to any of the preceding claims, **characterized in that** the result of said processing means is transformed into a multi-dimensional graphic representation of the damage (21).

9. A device for characterizing a structural damage comprising:

   - a support (2);
   - a moiré grid(1);
   - a lighting device (3);
   - an image acquisition means (8) of which the observation axis (10) is offset with respect to that of the lighting device (4);
   - an image processing means;
   - a display means for the result of said processing.

   **characterized in that** the moiré grid (1) is flexible.

10. A device according to claim 9, **characterized in that** the moiré grid or screen (1) undergoes an anti-reflection treatment prior to its use.

11. A device according to one of claims 10 or 11, **characterized in that** said image acquisition means (8) is secured to the support.

12. A device according to any one of claims 9 to 11, **characterized in that** a recording of the image is done by a digital acquisition means.

13. A device according to claim 12, **characterized in that** said recording is processed by processing means that apply image processing algorithms.

14. A device according to any of claims 9 to 13, **characterized in that** is also includes means to graphically transform the result provided by the image processing means, a screen for viewing the graphic representation obtained, permitting a representation according to a color scale, by two- or three-dimensional views (18, 21).

**Patentansprüche**

1. Verfahren zur Kennzeichnung eines Strukturschadens, umfassend die Schritte: ein Moire-Gitter (1) in Nähe der Oberfläche (14) der Struktur anordnen, eine Lichtquelle (3) auf das Gitter (1) so richten, dass ein Schatten des Gitters auf der Struktur erzeugt wird, und mit Hilfe eines Erfassungsmittels (8) ein Bild des Musters aufzeichnen, das durch das Gitter hindurch in einer von der Richtung der Lichtquelle abweichenden Beobachtungsrichtung beobachtet wird, wobei das Gitter (1) ein flexibles Gitter ist, das direkt auf die zu analysierende Oberfläche (14) aufgelegt ist, wobei dieses Verfahren außerdem die folgenden Schritte umfasst:

   - den Schaden ausgehend von dem aufgezeichneten Bild mit Hilfe eines Algorithmus zur Behandlung des Bildes graphisch darstellen und
   - den Schaden ausgehend von dieser Darstellung kennzeichnen.

2. Verfahren nach Anspruch 1, **dadurch gekennzeichnet, dass** es au-ßerdem die Schritte umfasst: die Oberfläche durchgehen, visuell das Vorhandensein oder nicht von Verformungen des Musters kontrollieren, das Durchgehen der Oberfläche anhalten, das Bild mit Hilfe eines Erfassungsmittels aufzeichnen und den Schaden kennzeichnen.

3. Verfahren nach Anspruch 2, umfassend die Schritte: ein oder mehrere aufgezeichnete, nicht behandelte Bilder zu versetzten Behandlungsmitteln übertragen, um die Schäden in verzögerter Zeit zu kennzeichnen.

4. Verfahren nach Anspruch 3, **dadurch gekennzeichnet, dass** der Algorithmus zur Behandlung des Bilds einen Schritt der Normalisierung der auf dem Bild erscheinenden Interferenzstreifen umfasst.

5. Verfahren nach Anspruch 3, **dadurch gekennzeichnet, dass** der Algorithmus die Phasenmodulierung ausführt, um die räumliche Lage jedes Punkts des Bilds ausgehend von den Merkmalen der Montage und von der beobachteten Stärke zu bestimmen.

6. Verfahren nach einem der vorhergehenden Ansprüche, **dadurch gekennzeichnet, dass** das Ergebnis des Schritts der graphischen Darstellung des Schadens eine graphische Darstellung nach einer Farbskala ist.

7. Verfahren nach einem der vorhergehenden Ansprüche, **dadurch gekennzeichnet, dass** das Ergebnis der Behandlungsmittel eine zweidimensionale graphische Darstellung des Schadens (18) ist.

8. Verfahren nach einem der vorhergehenden Ansprüche, **dadurch gekennzeichnet, dass** das Ergebnis der Behandlungsmittel in eine graphische Darstellung des Schadens (21) in mehreren Dimensionen umgewandelt wird.

9. Vorrichtung zur Kennzeichnung eines Strukturschadens, umfassend:

   - einen Halter (2),
   - ein Moire-Gitter (1),
   - ein Beleuchtungsmittel (3),
   - ein Bilderfassungsmittel (8), dessen Beobachtungsachse (10) gegen diejenige des Beleuchtungsmittels (4) versetzt ist,
   - ein Bildbehandlungsmittel,
   - ein Mittel zur Anzeige des Ergebnisses dieser Behandlung,

   **dadurch gekennzeichnet, dass** das Moire-Gitter (1) flexibel ist.

10. Vorrichtung nach Anspruch 9, **dadurch gekennzeichnet, dass** das Moire-Gitter (1) vor seiner Verwendung einer Antireflexbehandlung unterzogen wird.

11. Vorrichtung nach einem der Ansprüche 9 oder 10, **dadurch gekennzeichnet, dass** das Bilderfassungsmittel (8) an dem Halter befestigt ist.

12. Vorrichtung nach einem der Ansprüche 9 bis 11, **dadurch gekennzeichnet, dass** eine Aufzeichnung des Bilds durch ein digitales Erfassungsmittel stattfindet.

13. Vorrichtung nach Anspruch 12, **dadurch gekennzeichnet, dass** die Aufzeichnung durch Behandlungsmittel behandelt wird, die Bildbehandlungsalgorithmen anlegen.

14. Vorrichtung nach einem der Ansprüche 9 bis 13, **dadurch gekennzeichnet, dass** sie außerdem Mittel umfasst, um das von dem Bildbehandlungsmittel gelieferte Ergebnis graphisch umzuwandeln, einen Bildschirm für die Visualisierung der erhaltenen graphischen Darstellung, die eine Darstellung in einer Farbskala durch Aufnahmen in zwei oder drei Dimensionen (18, 21) gestatten.

Fig.1

Fig.2

Fig.3

Fig.4

20 18

19

Fig.5

24 21

22 23

Fig.6

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0674151 A
- WO 0039523 A
- US 5311286 A
- US 5025285 A

**Littérature non-brevet citée dans la description**

- **M. SERVIN ; J. A. QUIROGA.** *Journal of Modern Optics,* 2001, vol. 48 (3), 521-531